# EUROPEAN PATENT APPLICATION

(11) **EP 4 174 127 A1**
(43) Date of publication of application: **03.05.2023**
(21) Application number: 21828175.6
(22) Date of filing: 03.06.2021
(51) Int. Cl.: C08K 5/13, C08K 5/29, C08K 5/32, C08L 63/10, C08J 5/24, C08G 18/08, C08G 18/67

(54) **RADICAL CURABLE RESIN COMPOSITION, FIBER-REINFORCED MOLDING MATERIAL, AND MOLDED ARTICLE USING SAME**

(30) Priority: 25.06.2020 JP 2020109475
(71) Applicant: DIC Corporation, Tokyo 174-8520 (JP)
(72) Inventor: YASUTANI, Yoshihiro, Takaishi-shi, Osaka 592-0001 (JP)
(74) Representative: TBK
(86) International application number: PCT/JP2021/021118
(87) International publication number: WO 2021/261196

(57) **Abstract**

Provided is a radical curable resin composition containing as essential raw materials a vinyl ester resin (A), an unsaturated monomer (B) with a flash point of 100°C or higher, a polyisocyanate (C), a polymerization initiator (D), a stabilizer (E), and a polymerization inhibitor (F), the stabilizer (E) being a nitroxy radical, and the polymerization inhibitor (F) being at least one or more compounds represented by General Formula (1) or (2) below:

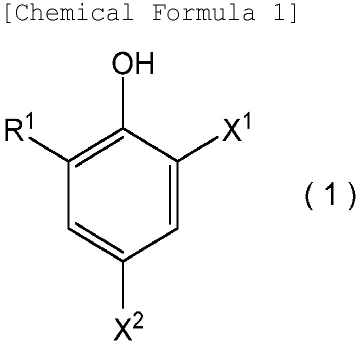

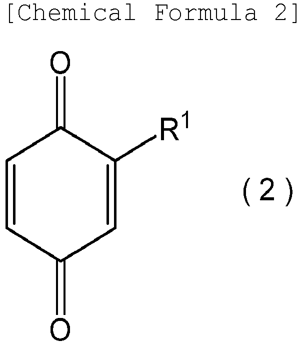

This radical curable resin composition is excellent in handleability, flexibility, and curability during molding and excellent in storage stability with little change over time in the curability during molding, and can thus be suitably used for molding materials and molded articles obtained therefrom. (In General Formulae (1) and (2), R¹ represents a hydrogen atom or a C₁₋₄ alkyl group, and X¹ and X² each independently represent a hydrogen atom, a C₁₋₄ alkyl group, a hydroxy group, or a methoxy group.)

## Description

### Technical Field

The present invention relates to a radical curable resin composition, a fiber-reinforced molding material, and a molded article using the same.

### Background Art

Fiber-reinforced resin composite materials, in which thermosetting resins such as epoxy resins and unsaturated polyester resins are reinforced with carbon fibers as reinforcing fibers, are attracting attention for their features that they have excellent heat resistance and mechanical strength while being lightweight, and their use is expanding in various structural applications such as automobile and aircraft housings and various components. With this fiber-reinforced resin composite material, the autoclave method, in which a material called prepreg is heated and cured with a pressurizable autoclave, is known as a method for molding a material using epoxy resins, whereas a method of curing and molding by methods such as press molding and injection molding using an intermediate material called a sheet molding compound (SMC) and a bulk molding compound (BMC) is known as a method for molding a material using unsaturated polyester resins. Especially in recent years, materials with excellent productivity have been actively developed.

As such molding materials, known is a carbon fiber-reinforced sheet-like molding material containing as essential components an unsaturated polyester resin, a vinyl monomer, a thermoplastic polymer, a polyisocyanate, a filler, conductive carbon black, and wide carbon fiber bundles, for example (refer to PTL 1, for example). Although molded articles with excellent appearance can be obtained from this molding material, it has a strong odor due to the use of a highly volatile styrene monomer, which causes problems in a work environment during molding work.

In contrast, developed is a fiber-reinforced molding material containing as essential raw materials a vinyl ester resin, an unsaturated monomer with a flash point of 100°C or higher, a polyisocyanate, a polymerization initiator, and carbon fibers (refer to PTL 2). However, this molding material has a problem in that its curability during molding changes over time.

### Citation List

### Patent Literature

PTL 1: Japanese Unexamined Patent Application Publication No. 2009-13306
PTL 2: Japanese Patent No. 6241583

### Summary of Invention

### Technical Problem

An object of the present invention is to provide a radical curable resin composition excellent in a working environment during molding work, handleability including film peelability and tackiness, flexibility, and curability during molding and excellent in storage stability with little change over time in the curability during molding, a fiber-reinforced molding material, and a molded article using the same.

### Solution to Problem

The inventors of the present invention have found out that a radical curable resin composition containing as essential raw materials a vinyl ester resin, a specific unsaturated monomer, a polyisocyanate, a polymerization initiator, a specific stabilizer, and a specific polymerization inhibitor can achieve the above object and have completed the present invention.

Specifically, the present invention relates to a radical curable resin composition containing as essential raw materials a vinyl ester resin (A), an unsaturated monomer (B) with a flash point of 100°C or higher, a polyisocyanate (C), a polymerization initiator (D), a stabilizer (E), and a polymerization inhibitor (F), the stabilizer (E) being a nitroxy radical, and the polymerization inhibitor (F) being at least one or more compounds represented by General Formula (1) or (2) below, a fiber-reinforced molding material, and an article using the same: 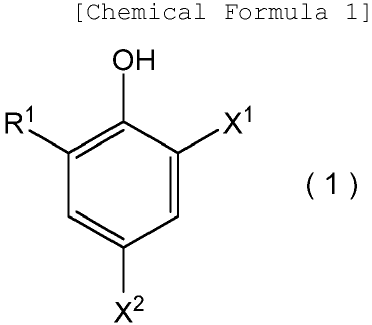 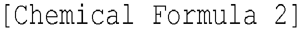 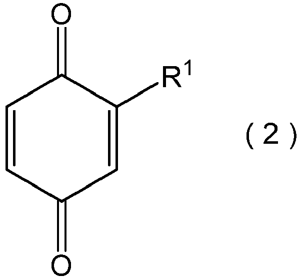 where in General Formulae (1) and (2), R¹ represents a hydrogen atom or a C₁₋₄ alkyl group, and X¹ and X² each independently represent a hydrogen atom, a C₁₋₄ alkyl group, a hydroxy group, or a methoxy group.

The radical curable resin composition of the present invention is excellent in handleability, flexibility, and curability during molding and is excellent in storage stability with little change over time in the curability during molding, and an obtained molded article is excellent in bending strength, bending modulus, and the like and can thus be suitably used for automobile components, railway vehicle components, aircraft and spacecraft components, ship components, housing equipment components, sports components, light vehicle components, architectural and civil engineering components, casings of OA equipment and the like, and the like.

### Description of Embodiments

The radical curable resin composition of the present invention is a radical curable resin composition containing as essential raw materials a vinyl ester resin (A), an unsaturated monomer (B) with a flash point of 100°C or higher, a polyisocyanate (C), a polymerization initiator (D), a stabilizer (E), and a polymerization inhibitor (F), the stabilizer (E) being a nitroxy radical and the polymerization inhibitor (F) being at least one or more compounds represented by General Formula (1) or (2).

The vinyl ester resin (A) is obtained by reacting an epoxy resin (a1) and a (meth)acrylic acid (a2) together, in which they are preferably reacted together with a molar ratio (COOH/EP) between the epoxy group (EP) of the epoxy resin (a1) and the carboxy group (COOH) of the (meth)acrylic acid (a2) being in a range of 0.6 to 1.1 because of being excellent in a balance between handleability such as film peelability and tackiness and flowability during molding. From this viewpoint, the epoxy equivalent weight of the epoxy resin (a1) is preferably in a range of 180 to 370 and more preferably in a range of 180 to 250.

In the present invention, the epoxy equivalent weight is a value obtained based on the method conforming to JIS K-7236: 2001.

In the present invention, "(meth)acrylic acid" refers to one or both of acrylic acid and methacrylic acid, and "(meth)acrylate" refers to one or both of acrylate and methacrylate.

Examples of the epoxy resin (a1) include bisphenol type epoxy resins such as bisphenol A type epoxy resins, bisphenol F type epoxy resins, bisphenol fluorene type epoxy resins, and bis-cresol fluorene type epoxy resins; novolac type epoxy resins such as phenol novolac type epoxy resins and cresol novolac type epoxy resins; glycidyl ethers of phenol such as oxazolidone-modified epoxy resins and brominated epoxy resins of these resins; glycidyl ethers of polyhydric alcohols such as dipropylene glycol diglycidyl ether, trimethylolpropane triglycidyl ether, diglycidyl ethers of alkylene oxide adducts of bisphenol A, and diglycidyl ether of hydrogenated bisphenol A; alicyclic epoxy resins such as 3,4-epoxy-6-methylcyclohexylmethyl-3,4-epoxy-6-methyl cyclohexanecarboxylate, and 1-epoxyethyl-3,4-epoxycyclohexane; glycidyl esters such as diglycidyl phthalate, diglycidyl tetrahydrophthalate, diglycidyl-p-oxybenzoic acid, dimer acid glycidyl ester; glycidyl amines such as tetraglycidyl diaminodiphenylmethane, tetraglycidyl-m-xylenediamine, triglycidyl-p-aminophenol, N,N-diglycidylaniline; and heterocyclic epoxy resins such as 1,3-diglycidyl-5,5-dimethylhydantoin and triglycidyl isocyanurate. Among these, bifunctional aromatic epoxy resins are preferred, and bisphenol A type epoxy resins and bisphenol F type epoxy resins are more preferred because of being more excellent in molded article strength, the handleability of a molding material, and the flowability of the molding material during molding. These epoxy resins can be used alone, or two or more can be used in combination.

The epoxy resin (a1) may also be used by increasing its molecular weight with a dibasic acid such as bisphenol A in order to adjust the epoxy equivalent weight.

The reaction of the epoxy resin and the (meth)acrylic acid is preferably carried out at 60 to 140°C using an esterification catalyst. Polymerization inhibitors and the like can also be used.

It is important that the unsaturated monomer (B) have a flash point of 100°C or higher. This can reduce an odor during molding work and provides an excellent working environment. In addition, the high boiling point of the unsaturated monomer provides excellent moldability during high-temperature molding and enables high-temperature, short-time molding, improving productivity.

The flash point in the present invention is a flash point measured by the Cleveland open cup method specified in JIS K2265-4: 2007.

Examples of the unsaturated monomer (B) include monofunctional (meth)acrylate compounds such as benzyl (meth)acrylate, phenoxyethyl (meth)acrylate, phenoxypolyethylene glycol (meth)acrylate, polyethylene glycol (meth)acrylate alkyl ether, polypropylene glycol (meth)acrylate alkyl ether, 2-ethylhexyl methacrylate, isodecyl (meth)acrylate, lauryl (meth)acrylate, isotridecyl (meth)acrylate, n-stearyl (meth)acrylate, tetrahydrofurfuryl methacrylate, isobornyl (meth)acrylate, dicyclopentenyl oxyethyl (meth)acrylate, and dicyclopentanyl methacrylate; di(meth)acrylate compounds such as ethylene glycol di(meth)acrylate, propylene glycol di(meth)acrylate, 1,4-butanediol di(meth)acrylate, 1,3-butanediol di(meth)acrylate, neopentyl glycol di(meth)acrylate, 1,6-hexanediol di(meth)acrylate, bisphenol di(meth)acrylate, and 1,4-cyclohexanedimethanol di(meth)acrylate; diallyl phthalate, and divinylbenzene. Among these, unsaturated monomers having an aromatic group are preferred because the molding material with higher strength can be obtained, and benzyl methacrylate and phenoxyethyl methacrylate are more preferred. These unsaturated monomers can be used alone, or two or more can be used in combination.

The mass ratio ((A)/(B)) between the vinyl ester resin (A) and the unsaturated monomer (B) is preferably in a range of 40/60 to 85/15 and more preferably in a range of 50/50 to 70/30 because of more improved balance among resin impregnability into carbon fibers, handleability (tackiness), and curability.

The viscosity of the mixture of the vinyl ester resin (A) and the unsaturated monomer (B) is preferably in a range of 200 to 8,000 mPa·s (25°C) because of more improved resin impregnability into carbon fibers.

Examples of the polyisocyanate (C) that can be used include aromatic polyisocyanates such as diphenylmethane diisocyanate (the 4,4'-form, the 2,4'-form, and the 2,2'-form, and mixtures thereof), modified forms of diphenylmethane diisocyanate such as the carbodiimide-modified form, the nurate-modified form, the biuret-modified form, the urethaneimine-modified form, and polyol-modified forms modified with polyols with a number average molecular weight of 1,000 or less such as diethylene glycol and dipropylene glycol of diphenylmethane diisocyanate, tolylene diisocyanate, tolidine diisocyanate, polymethylene polyphenyl polyisocyanate, xylylene diisocyanate, 1,5-naphthalene diisocyanate, and tetramethyl xylene diisocyanate; alicyclic polyisocyanates such as isophorone diisocyanate, hydrogenated diphenylmethane diisocyanate, hydrogenated xylylene diisocyanate, and norbornene diisocyanate; and aliphatic polyisocyanates such as hexamethylene diisocyanate and the nurate-modified form, the biuret-modified form, the adduct form, and dimer acid diisocyanate of hexamethylene diisocyanate. Among these, aromatic polyisocyanates are preferred because the molding material excellent in handleability (film peelability and tackiness) can be obtained. These polyisocyanates (C) can be used alone, or two or more can be used in combination.

The molar ratio (NCO/OH) between the isocyanate group (NCO) of the polyisocyanate (C) and the hydroxy group (OH) of the vinyl ester resin (A) is preferably in a range of 0.5 to 0.95 and more preferably in a range of 0.55 to 0.90 because of being more excellent in a balance between handleability (film peelability and tackiness) and flexibility.

As the polymerization initiator (D), which is not limited to a particular compound, organic peroxides are preferred. Examples thereof include diacyl peroxide compounds, peroxyester compounds, hydroperoxide compounds, ketone peroxide compounds, alkyl perester compounds, percarbonate compounds, and peroxy ketals, which can be selected as appropriate in accordance with molding conditions. These polymerization initiators (D) can be used alone, or two or more can be used in combination.

Among these, it is preferable to use a polymerization initiator with a temperature for obtaining a 10-hour half-life of 70°C or higher and 110°C or lower for the purpose of reducing a molding time. Being 70°C or higher and 110°C or lower is preferable because the fiber-reinforced molding material has a longer life at room temperature and can be cured in a shorter time by heating, which is more excellent in a balance between curability and moldability. Examples of such polymerization initiators include 1,6-bis(t-butylperoxycarbonyloxy)hexane, 1,1-bis(t-butylperoxy)cyclohexane, 1,1-bis(t-amylperoxy)cyclohexane, 1,1-bis(t-hexylperoxy)cyclohexane, t-butyl peroxydiethyl acetate, t-butyl peroxy isopropyl carbonate, t-amylperoxy isopropyl carbonate, t-hexyl peroxy isopropyl carbonate, di-tert-butyl peroxy hexahydro terephthalate, and t-amyl peroxy trimethylhexanoate.

The content of the polymerization initiator (D) is preferably in a range of 0.3 to 3% by mass with respect to the total amount of the vinyl ester resin (A) and the unsaturated monomer (B) because of being excellent in a balance between curing characteristics and storage stability.

It is important that the stabilizer (E) be a nitroxy radical in order to control changes over time in the curability of the molding material.

Examples of the nitroxy radical include 2,2,6,6-tetramethylpiperidine-1-oxyl, 2,2,5,5-tetramethylpiperidine-1-oxyl, 2,2,6,6-tetramethyl-4-hydroxypiperidine-1-oxyl, 2,2,6,6-tetramethyl-4 methoxypiperidine-1-oxyl, 2,2,6,6-tetramethyl-4-phenoxypiperidine-1-oxyl, 2,2,6,6-tetramethyl-4-oxopiperidine-1-oxyl, 2,2,5,5-tetramethylpyrrolidine-1-oxyl, 2,2,5,5-tetramethyl-3 carboxypyrrolidine-1-oxyl, 2,2,6,6-tetramethyl-4-acetamidopiperidine-1-oxyl, 2,2,6,6-tetramethyl-4-(2-iodoacetamide)piperidine-1-oxyl, 2,2,6,6-tetramethyl-4-aminopiperidine-1-oxyl, 2,2,6,6-tetramethyl-4-carboxypiperidine-1-oxyl, 2,2,6,6-tetramethyl-4-(2-chloroacetamide)piperidine-1-oxyl, 2,2,6,6-tetramethyl-4-cyanopiperidine-1-oxyl, 2,2,6,6-tetramethyl-4-hydroxypiperidine-1-oxylbenzoate, bis(2,2,6,6-tetramethyl-4-yl-piperidine-1-oxyl)sebacate, 2,2,6,6-tetramethyl-4-isothiocyanate-piperidine-1-oxyl, 2,2,6,6-tetramethyl-4 methacryloyloxypiperidine-1-oxyl, 2,2,6,6-tetramethyl-4-(2-propynyloxy)piperidine-1-oxyl, 2,2,6,6-tetramethyl-4-hydroxypiperidine-1-oxyl monophosphate, 4,4,5,5-tetramethyl-2-(4-nitrophenyl)imidazoline-3-oxide-1-oxyl, and 4,4,5,5-tetramethyl-2-phenylimidazoline-3-oxide-1-oxyl. Among these, preferred are 2,2,6,6-tetramethylpiperidine-1-oxyl, 2,2,6,6-tetramethyl-4-hydroxypiperidine-1-oxyl, and 2,2,5,5-tetramethylpyrrolidine-1-oxyl because of more improved storage stability.

The content of the stabilizer (E) is preferably in a range of 0.002 to 0.15% by mass, more preferably in a range of 0.005 to 0.1% by mass, and even more preferably in a range of 0.008 to 0.05% by mass with respect to the total amount of the vinyl ester resin (A) and the unsaturated monomer (B) because of being excellent in a balance between curing characteristics and storage stability.

For the stabilizer (E), other stabilizers other than the nitroxy radical can be used in combination.

It is important that the polymerization inhibitor (F) be at least one or more compounds represented by General Formula (1) or (2) below from the viewpoint of high solubility in the unsaturated monomer (B) and not interfering with the effect of the stabilizer (E): 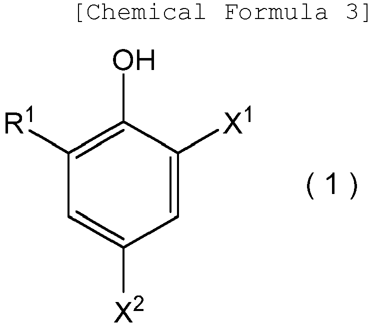 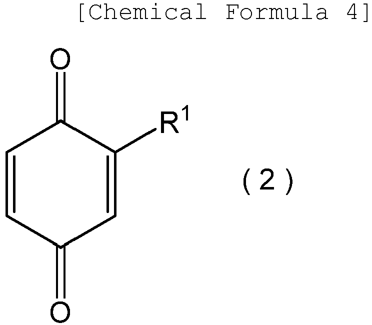 where in General Formulae (1) and (2), R¹ represents a hydrogen atom or a C₁₋₄ alkyl group, and X¹ and X² each independently represent a hydrogen atom, a C₁₋₄ alkyl group, a hydroxy group, or a methoxy group.

The polymerization inhibitor (F) is preferably hydroquinone, trimethylhydroquinone, 4-tert-butyl pyrocatechol, tert-butyl hydroquinone, toluhydroquinone, para-benzoquinone, 4-methoxyphenol, or 2,6-di-tert-butyl-p-cresol and more preferably 4-tert-butyl pyrocatechol, para-benzoquinone, 4-methoxyphenol, or 2,6-di-tert-butyl-p-cresol from the viewpoint of high solubility in the unsaturated monomer (B) and not interfering with the effect of the stabilizer (E).

The mass ratio (E/F) between the stabilizer (E) and the polymerization inhibitor (F) is preferably 1/20 to 50/1 and more preferably 1/10 to 20/1 from the viewpoint of curability and the expression of the effect of the stabilizer.

For the radical curable resin composition of the present invention, other polymerization inhibitors other than the polymerization inhibitor (F) may be used as needed.

The radical curable resin composition of the present invention may contain a substance other than the vinyl ester resin (A), the unsaturated monomer (B) with a flash point of 100°C or higher, the polyisocyanate (C), the polymerization initiator (D), the stabilizer (E), and the polymerization inhibitor (F). Examples that can be contained include thermosetting resins other than the vinyl ester resin (A), thermoplastic resins, curing accelerators, fillers, low shrinkage agents, mold release agents, thickeners, thinners, pigments, antioxidants, plasticizers, fire retardants, antibacterial agents, UV stabilizers, reinforcing materials, and photocuring agents.

Examples of the thermosetting resins include vinyl urethane resins, unsaturated polyester resins, acrylic resins, epoxy resins, phenolic resins, melamine resins, and furan resins. These thermosetting resins can be used alone, or two or more can be used in combination.

Examples of the thermoplastic resins include polyamide resins, polyethylene terephthalate resins, polybutylene terephthalate resins, polycarbonate resins, urethane resins, polypropylene resins, polyethylene resins, polystyrene resins, acrylic resins, polybutadiene resins, polyisoprene resins, and those obtained by modifying them by copolymerization or the like. These thermoplastic resins can be used alone, or two or more can be used in combination.

Examples of the curing accelerators include metal soaps such as cobalt naphthenate, cobalt octenoate, vanadyl octenoate, copper naphthenate, and barium naphthenate; and metal chelate compounds such as vanadyl acetylacetate, cobalt acetylacetate, and iron acetylacetonate. Examples of the amines include N,N-dimethylamino-p-benzaldehyde, N,N-dimethylaniline, N,N-diethylaniline, N,N-dimethyl-p-toluidine, N-ethyl-m-toluidine, triethanolamine, m-toluidine, diethylenetriamine, pyridine, phenylmorpholine, piperidine, and diethanolaniline. These curing accelerators can be used alone, or two or more can be used in combination.

The fillers, including inorganic compounds and organic compounds, can be used in order to adjust the properties such as strength, elastic modulus, impact strength, and fatigue endurance of a molded article.

Examples of the inorganic compounds include calcium carbonate, magnesium carbonate, barium sulfate, mica, talc, kaolin, clay, celite, asbestos, barite, baryta, silica, silica sand, dolomite limestone, gypsum, aluminum fine powder, hollow balloon, alumina, glass powder, aluminum hydroxide, white limestone, zirconium oxide, antimony trioxide, titanium oxide, molybdenum dioxide, and iron powder.

Examples of the organic compounds include natural polysaccharide powders such as cellulose and chitin and synthetic resin powders. As the synthetic resin powders, organic powders containing hard resins, soft rubbers, and elastomers or polymers (copolymers) and particles having multilayer structures such as core-shell type can be used. Specific examples thereof include particles formed of butadiene rubbers and/or acrylic rubbers, urethane rubbers, silicone rubbers, or the like, polyimide resin powders, fluororesin powders, and phenolic resin powders. These fillers can be used alone, or two or more can be used in combination.

Examples of the mold release agents include zinc stearate, calcium stearate, paraffin waxes, polyethylene waxes, and Carnauba waxes. Preferable examples thereof include paraffin waxes, polyethylene waxes, and Carnauba waxes. These mold release agents can be used alone, or two or more can be used in combination.

Examples of the thickeners include metal oxides and metal hydroxides such as magnesium oxide, magnesium hydroxide, calcium oxide, and calcium hydroxide and acrylic resin-based fine particles, which can be selected as appropriate according to the handleability of the fiber-reinforced molding material of the present invention. These thickeners can be used alone, or two or more can be used in combination.

The fiber-reinforced molding material of the present invention contains the radical curable resin composition and reinforcing fibers (G) with a fiber length of 2.5 to 50 mm.

As the reinforcing fibers (G), fibers cut into a length of 2.5 to 50 mm are used, and fibers cut into 5 to 40 mm are more preferred because of more improved in-mold flowability during molding, and more improved appearance and mechanical properties of the molded article.

Examples of the reinforcing fibers (G) include carbon fibers, glass fibers, aramid fibers, alumina fibers, silicon carbide fibers, boron fibers, metallic fibers, natural fibers, and mineral fibers, in which carbon fibers are preferred because of being high in specific strength and specific stiffness and an expectation for a weight reduction effect and being excellent in affinity with the vinyl ester resin. These reinforcing fibers (G) can be used alone, or two or more can be used in combination.

As the carbon fibers, various types of ones such as polyacrylonitrile-based, pitch-based, and rayon-based ones can be used. Among these, polyacrylonitrile-based ones are preferred because high-strength carbon fibers can be easily obtained.

The number of filaments of fiber bundles used as the reinforcing fibers (G) is preferably 1,000 to 60,000 because of more improved resin impregnability and mechanical properties of the molded article.

The content of the reinforcing fibers (G) in the components of the fiber-reinforced molding material of the present invention is preferably in a range of 20 to 80% by mass and more preferably in a range of 40 to 70% by mass because of more improved mechanical properties of the obtained molded article. If the fiber content is low, the molded article with high strength is not necessarily obtained, whereas if the fiber content is high, resin impregnability to the fibers is insufficient, swelling occurs in the molded article, and again the molded article with high strength is not necessarily obtained.

The reinforcing fibers (G) in the fiber-reinforced molding material of the present invention are impregnated into the resin with a random fiber direction.

The fiber-reinforced molding material of the present invention is preferably a sheet molding compound (hereinafter abbreviated as "SMC") or a bulk molding compound (hereinafter abbreviated as "BMC") from the viewpoint of being excellent in productivity and the viewpoint of moldability with design versatility.

Examples of the method for manufacturing the SMC include a method of mixing and dispersing the components including the vinyl ester resin (A), the unsaturated monomer (B), the polyisocyanate (C), the polymerization initiator (D), the stabilizer (E), and the polymerization inhibitor (F) using a mixing machine such as an ordinary mixer, an inter mixer, a planetary mixer, a roll, a kneader, or an extruder, applying the obtained resin composition to carrier films installed above and below so as to give a uniform thickness, holding the reinforcing fibers (G) between the resin composition on the carrier films installed above and below, then passing the whole through the gap between impregnation rolls and applying pressure to impregnate the reinforcing fibers (G) with the resin composition, and rolling it up into a roll form or folding it into a zigzag form. In addition, this is preferably followed by performing aging at a temperature of 10 to 60°C for 2 to 48 hours. In the aging process, it is preferable to hermetically seal the molding material with a metal-deposited film or the like because side reactions with moisture and the like are inhibited, making it easier to control the reaction of the vinyl ester resin (A) and the polyisocyanate (C).

As the carrier films, polyethylene films, polypropylene films, laminated films of polyethylene and polypropylene, polyethylene terephthalate, nylon, or the like can be used.

Examples of the method for manufacturing the BMC include, like the method for manufacturing the SMC, a method of mixing and dispersing the components including the vinyl ester resin (A), the unsaturated monomer (B), the polyisocyanate (C), the polymerization initiator (D), the stabilizer (E), and the polymerization inhibitor (F) using a mixing machine such as an ordinary mixer, an inter mixer, a planetary mixer, a roll, a kneader, or an extruder and mixing and dispersing the reinforcing fibers (G) into the obtained resin composition. In addition, this is preferably followed by aging in the same manner as in the SMC.

The molded article of the present invention is obtained from the fiber-reinforced molding material, in which the method for molding is preferably heat compression molding of the SMC or the BMC because of being excellent in productivity and from the viewpoint of being excellent in design versatility.

As the heat compression molding, a method of production used is weighing a certain amount of a molding material such as the SMC or the BMC, charging it into a mold heated in advance to 110 to 180°C, performing clamping in a compression molding machine to impart shape to the molding material, holding a molding pressure of 0.1 to 30 MPa to cure the molding material, and then taking out a molded article to obtain the molded article, for example. As specific molding conditions, preferred are molding conditions maintaining a molding pressure of 1 to 15 MPa for 1 to 5 minutes per 1 mm thickness of the molded article at a mold temperature of 120 to 160°C in the mold, and more preferred are molding conditions maintaining a molding pressure of 1 to 15 MPa for 1 to 3 minutes per 1 mm thickness of the molded article at a mold temperature of 140 to 160°C because of more improved productivity.

The molded article obtained from the fiber-reinforced molding material of the present invention is excellent in appearance, bending strength, bending modulus, and the like and can thus be suitably used for automobile components, railway vehicle components, aircraft and spacecraft components, ship components, housing equipment components, sports components, light vehicle components, architectural and civil engineering components, casings of OA equipment and the like, and the like.

### [Examples]

The following describes the present invention in more detail with reference to specific examples. For the hydroxy group value, the number of milligrams of potassium hydroxide (mgKOH/g) required to neutralize acetic acid generated when 1 g of a resin sample was reacted at a specified temperature and time using an acetylating agent was measured based on the method specified in JIS K-0070. For the acid value, the number of milligrams of potassium hydroxide (mgKOH/g) required to neutralize free fatty acids, resin acids, and the like contained in 1 g of a resin sample was measured based on the method specified in JIS K-0070.

### (Synthesis Example 1: Synthesis of Vinyl Ester Resin (A-1))

To a 2 L flask equipped with a thermometer, a nitrogen introducing tube, and a stirrer, charged were 725 parts by mass of an epoxy resin ("Epiclon 860", a bisphenol A type epoxy resin, an epoxy equivalent weight of 220 manufactured by DIC Corporation), 284 parts by mass of methacrylic acid, and 0.28 part by mass of t-butylhydroquinone, and the temperature was raised up to 90°C under the circulation of gas with nitrogen and air mixed together at 1:1. 2-Methylimidazole in an amount of 0.60 part by mass was added thereto, and the temperature was raised up to 110°C to cause a reaction for 10 hours, and the acid value became 6 or less, when the reaction was ended. After cooling to around 60°C, the product was taken out of the reaction vessel to obtain a vinyl ester resin (A-1) with a hydroxy group value of 215 mgKOH/g.

### (Example 1: Production and Evaluation of Radical Curable Resin Composition (1))

With 100 parts by mass of a resin solution in which 55 parts by mass of the vinyl ester resin (A-1) obtained in Synthesis Example 1 had been dissolved in 45 parts by mass of phenoxyethyl methacrylate, mixed were 23 parts by mass of a polyisocyanate ("Lupranate MI", a liquid monomeric diphenylmethane diisocyanate manufactured by BASF INOAC Polyurethanes Ltd.; hereinafter abbreviated as a "polyisocyanate (C-1)"), 1.2 parts by mass of a polymerization initiator ("Kayacarbon AIC-75", an organic peroxide manufactured by Kayaku Akzo Corporation; hereinafter abbreviated as a "polymerization initiator (D-1)"), 0.02 part by mass of a stabilizer (2,2,6,6-tetramethylpiperidine-1-oxyl; hereinafter abbreviated as a "stabilizer (E-1)"), and 0.15 part by mass of a polymerization inhibitor (2,6-di-tert-butyl-p-cresol; hereinafter abbreviated as a "polymerization inhibitor (F-1)") to obtain a radical curable resin composition (1). The molar ratio (NCO/OH) in this radical curable resin composition (1) was 0.87.

The radical curable resin composition (1) obtained above was applied onto a laminated film of polyethylene and polypropylene so as to give an average application amount of 0.5 kg/m², and carbon fibers obtained by cutting carbon fiber roving ("T700SC-12000-50C" manufactured by Toray Industries, Inc.) to 25 mm (hereinafter abbreviated as reinforcing fibers (G-1)) were uniformly dropped thereonto from the air so as to give no fiber directivity, uniform thickness, and a carbon fiber content of 50% by mass, which was covered with a film coated with the radical curable resin composition (1) so as to give 0.5 kg/m² in the same manner as above to impregnate the carbon fibers with the resin, which was then packed and hermetically sealed with an aluminum vapor-deposited film and was left in a 40°C thermostat for 20 hours to obtain a sheet-like fiber-reinforced molding material (1). This sheet-like fiber-reinforced molding material (1) had a weight per unit area of 2 kg/m² and a thickness of 2 mm.

### [Evaluation of Handleability (Film Peelability)]

Peelability when peeling off the fiber-reinforced molding material (1) obtained above from a polypropylene film at 25°C was evaluated in accordance with the following criteria.
O: There is no stickiness in the molding material, leaving no adherents on the film.
Δ: There is stickiness in the molding material, leaving adherents partially on the film.
X: The molding material and the film adhere to each other, leaving a large number of adherents on the film.

### [Evaluation of Handleability (Tackiness)]

Tackiness after peeling off the fiber-reinforced molding material (1) obtained above from the film at 25°C was evaluated in accordance with the following criteria.
O: There is no adhesion of the molding material to a finger.
Δ: There is little adhesion of the molding material to a finger.
X: There is adhesion of the molding material to a finger.

### [Evaluation of Curability during Molding]

The fiber-reinforced molding material (1) obtained above was cut into four pieces with a size of 50 mm × 50 mm, and two sets of two pieces with the film peeled off and bonded together were made. Next, a thermocouple for temperature measurement was placed near the center of one set bonded together, and the other set was further placed over the thermocouple to obtain a laminate (1) of approximately 8 mm.

This laminate (1) was installed in a press machine (a flat mold giving a molded plate of 4 mm thick with a mold setting temperature of 140°C) and was then promptly pressurized at 0.3 MPa, and the time from the point in time when the temperature at the center of the laminate exceeded 50°C until the maximum temperature was reached (hereinafter abbreviated as a "curing time") was measured to evaluate curability during molding according to the following criteria. One that can ensure sufficient filling time to the mold and excellent in production efficiency was marked with O.
O: The curing time is 30 seconds or more and less than 180 seconds.
X: The curing time is less than 30 seconds or 180 seconds or more.

### [Evaluation of Storage Stability]

The curing time of the fiber-reinforced molding material (1) that had been stored in a thermostat oven at 25°C for one month was also measured in the same manner as above.

The curing time of the fiber-reinforced molding material (1) immediately after the aging process and the curing time of the fiber-reinforced molding material (1) after one month of storage at 25°C were compared with each other to evaluate storage stability according to the following criteria.
O: The difference in the curing time is less than 5 seconds.
Δ: The difference in the curing time is 5 seconds or more and less than 10 seconds.
x: The difference in the curing time is 10 seconds or more.

### [Evaluation of Flexibility]

O: It can be easily installed to follow the shape of the mold during molding.
Δ: Elastic force (repulsion) is slightly exerted, but it can be installed to follow the shape of the mold during molding.
x: Elastic force is strongly exerted, and it cannot be installed to follow the shape of the mold during molding.

### [Production of Molded Article]

The sheet-like fiber-reinforced molding material (1) obtained above was peeled off from the film and was cut into two 260 mm × 260 mm pieces, which were stacked on each other, set at the central part of a 30 × 30 cm² flat mold, and molded at a press mold temperature of 150°C, a press time of 3 minutes, and a press pressure of 12 MPa to obtain a flat plate-like molded article (1) with a thickness of 2 mm.

### [Evaluation of Bending Strength and Bending Modulus]

Five samples were cut out of the molded article (1) obtained above in each of a horizontal direction and a vertical direction, a three-point bending test was conducted thereon in conformity to JIS K7074 to evaluate bending strength and bending modulus according to the following criteria. For bending strength, one with 350 MPa or more was marked with "O", whereas one with less than 350 MPa was marked with "X". For bending modulus, one with 25 GPa or more was marked with "O", whereas one with less than 25 GPa was marked with "X".

### (Examples 2 to 6: Production and Evaluation of Radical Curable Resin Compositions (2) to (6))

After producing radical curable resin compositions (2) to (6) in the same manner as in Example 1 except that the composition in Example 1 was changed as listed in Table 1, fiber-reinforced molding materials (2) to (6) were produced and underwent each evaluation.

### (Comparative Examples 1 and 2: Production and Evaluation of Radical Curable Resin Compositions (R1) and (R2))

After producing radical curable resin compositions (R1) and (R2) in the same manner as in Example 1 except that the composition in Example 1 was changed as listed in Table 2, fiber-reinforced molding materials (R1) and (R2) were produced and underwent each evaluation.

Table 1 and Table 2 list the evaluation results of the radical curable resin compositions (1) to (6) and (R1) and (R2) obtained above.

**[Table 1]**

| Table 1 | | Example 1 | Example 2 | Example 3 | Example 4 | Example 5 | Example 6 |
|---|---|---|---|---|---|---|---|
| Radical curable resin composition | | (1) | (2) | (3) | (4) | (5) | (6) |
| Composition (Parts by mass) | Vinyl ester (A-1) | 55 | 55 | 55 | 55 | 55 | 55 |
| | Unsaturated monomer (B-1) | 45 | 45 | 45 | 45 | 45 | 45 |
| | Polyisocyanate (C-1) | 23 | 23 | 18 | 6 | | |
| | Polyisocyanate (C-2) | | | 5 | 16 | 22 | 22 |
| | Polymerization initiator (D-1) | 1.2 | 1.2 | 1.2 | 1.2 | 1.2 | 1.2 |
| | Stabilizer (E-1) | 0.02 | 0.05 | | | | |
| | Stabilizer (E-2) | | | 0.01 | 0.05 | | 0.02 |
| | Stabilizer (E-3) | | | | | 0.05 | 0.02 |
| | Polymerization inhibitor (F-1) | 0.15 | 0.15 | 0.05 | | | |
| | Polymerization inhibitor (F-2) | | | 0.04 | 0.05 | | |
| | Polymerization inhibitor (F-3) | | | | | 0.05 | |
| | Polymerization inhibitor (F-4) | | | | | | 0.07 |
| Evaluation results | Handleability (film peelability) | ○ | ○ | ○ | ○ | ○ | ○ |
| | Handleability (tackiness) | ○ | ○ | ○ | ○ | ○ | ○ |
| | Curability during molding | ○ | ○ | ○ | ○ | ○ | ○ |
| | Storage stability | ○ | ○ | ○ | ○ | ○ | ○ |
| | Flexibility | ○ | ○ | ○ | ○ | ○ | ○ |
| | Bending strength of molded article (MPa) | ○ | ○ | ○ | ○ | ○ | ○ |
| | Bending modulus of molded article (GPa) | ○ | ○ | ○ | ○ | ○ | ○ |

**[Table 2]**

| Table 2 | | Comparative Example 1 | Comparative Example 2 |
|---|---|---|---|
| Radical curable resin composition | | (R1) | (R2) |
| Composition (Parts by mass) | Vinyl ester (A-1) | 55 | 55 |
| | Unsaturated monomer (B-1) | 45 | 45 |
| | Polyisocyanate (C-1) | 23 | 23 |
| | Polymerization initiator (D-1) | 1.2 | 1.2 |
| | Stabilizer (E-1) | | 0.05 |
| | Polymerization inhibitor (F-1) | 0.15 | |
| Evaluation results | Handleability (film peelability) | ○ | ○ |
| | Handleability (tackiness) | ○ | ○ |
| | Curability during molding | ○ | X |
| | Storage stability | X | ○ |
| | Flexibility | ○ | ○ |
| | Bending strength of molded article (MPa) | ○ | ○ |
| | Bending modulus of molded article (GPa) | ○ | ○ |

The abbreviations in the above tables are as follows: "Polyisocyanate (C-1)": "Lupranate MI", liquid monomeric diphenylmethane diisocyanate manufactured by BASF INOAC Polyurethanes Ltd.
"Polyisocyanate (C-2)": "Cosmonate LL", the carbodiimide-modified form of diphenylmethane diisocyanate manufactured by Mitsui Chemicals SKC Polyurethanes Inc.
"Polymerization initiator (D-1)": "Kayacarbon AIC-75" manufactured by Kayaku Akzo Corporation
"Stabilizer (E-1)": 2,2,6,6-tetramethylpiperidine-1-oxyl
"Stabilizer (E-2)": 2,2,6,6-tetramethyl-4-hydroxypiperidine-1-oxyl
"Stabilizer (E-3)": 2,2,5,5-tetramethylpyrrolidine-1-oxyl
"Polymerization inhibitor (F-1)": 2,6-di-tert-butyl-p-cresol
"Polymerization inhibitor (F-2)": para-benzoquinone
"Polymerization inhibitor (F-3)": 4-methoxyphenol
"Polymerization inhibitor (F-4)": 4-tert-butyl pyrocatechol

It was confirmed that the fiber-reinforced molding materials obtained from the radical curable resin compositions of the present invention in Examples 1 to 6 were excellent in handleability such as film peelability and tackiness, curability during molding, storage stability, and flexibility and the obtained molded articles were excellent in bending strength and bending modulus.

On the other hand, it was confirmed that Comparative Example 1, which is an example not containing the stabilizer (E) as one of the essential components of the present invention, was inferior in storage stability.

It was confirmed that Comparative Example 2, which is an example not containing the polymerization inhibitor (F) as one of the essential components of the present invention, was inferior in curability during molding.

## Claims

1. A radical curable resin composition comprising as essential raw materials a vinyl ester resin (A), an unsaturated monomer (B) with a flash point of 100°C or higher, a polyisocyanate (C), a polymerization initiator (D), a stabilizer (E), and a polymerization inhibitor (F), the stabilizer (E) being a nitroxy radical, and the polymerization inhibitor (F) being at least one or more compounds represented by General Formula (1) or (2) below: 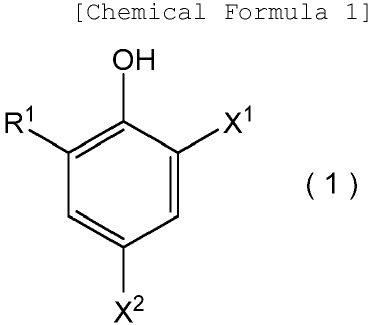 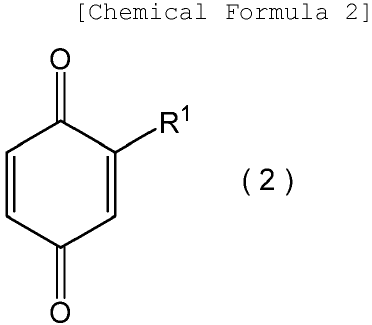 where in General Formulae (1) and (2), R¹ represents a hydrogen atom or a C₁₋₄ alkyl group, and X¹ and X² each independently represent a hydrogen atom, a C₁₋₄ alkyl group, a hydroxy group, or a methoxy group.

2. A fiber-reinforced molding material comprising:
the radical curable resin composition according to claim 1; and
reinforcing fibers (G) with a fiber length of 2.5 to 50 mm.

3. A molded article comprising the fiber-reinforced molding material according to claim 1 or 2.
